# EUROPÄISCHE PATENTSCHRIFT

(11) **EP 1 948 917 B1**
(45) Veröffentlichungstag und Bekanntmachung des Hinweises auf die Patenterteilung: **08.08.2012**
(21) Anmeldenummer: 06828995.8
(22) Anmeldetag: 10.11.2006
(51) Int. Cl.: F01P 7/16, F02B 29/04, F02B 37/013

(54) **KREISLAUFSYSTEM, MISCHORGAN**
CIRCULATION SYSTEM, MIXING ELEMENT
SYSTEME A CIRCULATION, ORGANE MELANGEUR

(30) Priorität: 10.11.2005 DE 102005053983
(43) Veröffentlichungstag der Anmeldung: 30.07.2008
(73) Patentinhaber: Behr GmbH & Co. KG, 70469 Stuttgart (DE); Behr Thermot-tronik GmbH, 70806 Kornwestheim (DE)
(72) Erfinder: MÜLLER, Rolf, 71711 Steinheim (DE); PANTOW, Eberhard, 71696 Möglingen (DE); PARMENTIER, Sarah, 74321 Bietigheim-Bissigen (DE); WILLERS, Eike, 70469 Stuttgart (DE)
(74) Vertreter: Grauel, Andreas
(86) Internationale Anmeldenummer: PCT/EP2006/010787
(87) Internationale Veröffentlichungsnummer: WO 2007/054330

(56) Entgegenhaltungen:
- WO-A-02/02917
- WO-A-2004/063543
- WO-A1-2005/073535
- WO-A1-2007/025607
- DE-A- 10 139 315
- DE-A- 10 215 262
- DE-A1-102004 060 658
- GB-A- 2 178 157
- US-A1- 2002 056 444

## Beschreibung

Die vorliegende Erfindung betrifft Kreislaufsystem mit mindestens einem ersten Teilstrom, mit dem ein erster Wärmetauscher durchströmbar ist, und einem zweiten Teilstrom eines ersten Mediums, mit mindestens einem zweiten Wärmetauscher, der als Ladeluftkühler ausgebildet ist, welcher von einem ersten Medienstrom durchströmbar ist, mit mindestens einem regelbaren Mischorgan, das zuströmseitig mit dem ersten Teilstrom und dem zweiten Teilstrom beströmbar ist und abströmseitig den Medienstrom mit einer Zieltemperatur erzeugt. Ein derartiges Kreislaufsystem ist aus der GB 2 178 157 A bekannt.

Bei Nutzfahrzeugen wird die Ladeluft direkt, insbesondere mit Kühlluft, gekühlt. Bei Pkws ist die indirekte Ladeluftkühlung zwar vorhanden aber ein separater Kreislauf mit einer zusätzlichen elektrischen Pumpe wird eingesetzt. Meistens ist diese Pumpe nicht geregelt, d.h. entweder an oder aus. Sie kann aber auch geregelt sein.

In der DE 10 2004 060 658 A1 ist ein Kreislaufsystem mit einem Niedertemperatur-Kühlmittelkreislauf zur Kühlung von Ladeluft bei einem Kraftfahrzeug mit einem Aufladegerät mit einem Ladeluft/Kühlmittel-Kühler offenbart, wobei ein Temperatur-Sensor am Kühlmittelaustritt des Ladeluft/Kühlmittel-Kühlers oder kurz danach zur Messung der Kohlmittelaustrits-Temperatur vorgesehen ist. Dies ermöglicht eine Kohlmitteldurchsatzregelung in Abhängigkeit der Kühlmittelaustritts-Temperatur des Kühlmittels aus dem Ladeluft/Kühlmittel-Kühler. Hierbei kann der Sensor in den Austritt aus dem Ladeluft/Kühlmittel-Kohler integriert sein oder aber kurz nach dem Ladeluft/Kühlmittel-Kühler angeordnet sein, wobei der Abstand zum Ladeluft/Kühlmittel-Kühler möglichst klein sein sollte, um eine optimale und insbesondere schnelle Regelung zu gewährleisten.

Die Temperatur kann über einen Temperatur-Sensor, der als Thermostat ausgebildet ist, direkt ermittelt werden, wobei durch diese Ausgestaltung kein separat ausgebildetes Regelventil oder eine andere Vorrichtung zur Regelung des Kühlmittelvolumenstroms erforderlich ist. Ist ein einfacher Temperatur-Sensor vorgesehen, so erfolgt eine Kühlmittelvolumenstromregelung anhand des Messwerts mittels eines Regelventils oder einer anderen Vorrichtung zur Regelung des Kühlmittelvolumenstroms. Dabei kann das Regelventil o.ä. vor einem Niedertemperatur-Kühlmitiel-Kühler und vor dem Ladeluft/Kühlmittel-Kühler angeordnet sein. Alternativ kann es auch nach dem Temperatur-Sensor angeordnet sein.

Bei direkter Ladeluftkühlung ist eine Temperierung der Ansaugluft nicht vorteilhaft. Die Ladeluft wird entsprechend der Kühlluftdurchströmung gekühlt. Der direkte Ladeluftkühler ist so ausgelegt, dass für lediglich für Volllastbetriebspunkte die erwünsche Abkühlung erfolgt.

Im Gegensatz zur direkten Ladeluftkühlung ist die Temperierung der Ansaugluft mittels einer Regelung des Kühlmitteldurchsatzes möglich. Dies ist allein jedoch nicht besonders vorteilhaft.

Es ist Aufgabe der vorliegenden Erfindung ein Kreislaufsystem der beschrieben Art zu verbessern.

Die Aufgabe wird durch die Merkmale des Anspruchs 1 gelöst.

Erfindungsgemäß ist ein Kreislaufsystem vorgesehen, mit mindestens einem ersten Teilstrom, mit dem ein erster Wärmetauscher, insbesondere ein Niedertemperaturkühlmittelkühler, durchströmbar ist, und einem zweiten Teilstrom eines ersten Mediums, insbesondere eines Kühlmediums, mit mindestens einem zweiten Wärmetauscher, insbesondere mit einem Ladeluftkühler, welcher von einem ersten Medienstrom durchströmbar ist, mit mindestens einem regelbaren Mischorgan, das zuströmseitig mit dem ersten Teilstrom und/oder dem zweiten Teilstrom beströmbar ist und abströmseitig den Medienstrom mit einer Zieltemperatur erzeugt.

Weitere vorteilhafte Ausgestaltungen der Erfindung ergeben sich aus den Unteransprüchen und aus der Zeichnung.

In einer vorteilhaften Weiterbildung weist das Kreislaufsystem mindestens einen zweiten Medienstrom, insbesondere einen Ladeluftstrom, auf, mit dem mindestens ein erster Verdichter, mindestens eine erste Turbine, wobei insbesondere der Verdichter und die Turbine koppelbar sind, und der zweite Wärmetauschers durchströmbar sind, wobei der zweite Wärmetauscher abströmseitig des ersten Verdichters angeordnet ist. Der Verdichter und die Turbine sind besonders vorteilhaft zu einem Turbolader ausgebildet.

In einer vorteilhaften Ausgestaltung der erste Wärmetauscher, insbesondere der Ladeluftkühler in einem Niedertemperaturkreislauf angeordnet. Der Niedertemperaturkreislauf weist eine geringere Temperatur als der Hochtemperaturkreislauf auf. Mit dem Hochtemperaturkreislauf, insbesondere einem Kühlmittelkreislauf, mit beispielsweise einem Kühlmittel-Luft-Kühler, ist ein Verbrennungsmotor besonders vorteilhaft kühlbar. Aus dem Hochtemperaturkreislauf ist zweigt ein Niedertemperaturkreislauf ab, wobei das Kühlmittel in einem weiteren Wärmetauscher, insbesondere Kühlmittel-Luft-Kühler, besonders vorteilhaft weiter kühlbar, insbesondere unter die Temperatur des Kühlmittels im Hochtemperaturkreislauf kühlbar, ist.

In einer vorteilhaften Weiterbildung weist das Kreislaufsystem einen dritten Wärmetauscher, insbesondere einen Kühlmittelkühler, auf, der in einem Hochtemperaturkreislauf zur Kühlung eines Verbrennungsmotors angeordnet ist. Der Kühlmittelkühler ist besonders vorteilhaft mit Kühlflüssigkeit, insbesondere Kühlwasser, beströmbar.

In einer vorteilhaften Ausbildung weist das Kreislaufsystem mindestens eine Pumpe auf, die insbesondere im Hochtemperaturkreislauf angeordnet ist. Insbesondere ist die Pumpe eine Kühlmittelpumpe, die Kühlmittel besonders vorteilhaft durch den Hochtemperaturkreislauf und/oder durch den Niedertemperaturkreislauf pumpt.

In einer weiteren vorteilhaften Ausführung stehen der Hochtemperaturkreislauf und der Niedertemperaturkreislauf in Strömungsverbindung. Aus dem Hochtemepraturkreislauf, der insbesondere einen HochtemperaturKühlmittelkühler durchströmt und insbesondere einen Motor besonders vorteilhaft kühlt, weist einen Abzweig zu einem Niedertemperaturkreislauf auf. Auf diese Weise ist eine Strömungsverbindung zwischen Hochtemepraturkreislauf und Niedertemperaturkreislauf besonders vorteilhaft ausgebildet.

In einer weiteren vorteilhaften Ausbildung ist der erste Teilstrom aus dem Hochtemperaturkreislauf, insbesondere nach der Pumpe, abzweigbar und bildet insbesondere zumindest abschnittsweise den Niedertemperaturkreislauf. Der erste Teilstrom ist besonders vorteilhaft nach der Pumpe aus dem Hochtemperaturkreislauf abzweigbar, um einen stabilen Kreislauf zu haben.

In einer vorteilhaften Weiterbildung sind das Mischorgan und der erste Wärmetauscher, insbesondere ein Luft-Kühlmittelkühler, besonders vorteilhaft mit dem ersten Teilstrom in Strömungsverbindung bringbar. Insbesondere ist das Mischorgan mit dem ersten Teilstrom, insbesondere nachdem dieser den ersten Wärmetauscher durchströmt hat, beströmbar.

In einer weiteren vorteilhaften Ausführung ist der zweite Teilstrom aus dem Hochtemperaturkreislauf, insbesondere nach der Pumpe und insbesondere im Wesentlichen unmittelbar vor dem Verbrennungsmotor, abzweigbar. Insbesondere durch eine Abzweigung nach der Pumpe ist der zweite Teilstrom besonders vorteilhaft mit hohem Druck dem Mischorgan zuführbar. Besonders vorteilhaft ist insbesondere das Abzweigen unmittelbar vor dem Verbrennungsmotor, da der zweite Wärmetauscher und das Mischorgan besonders vorteilhaft benachbart oder im Wesentlichen in der Nähe des Verbrennungsmotor besonders bauraumsparend anordenbar sind.

In einer weiteren vorteilhaften Ausgestaltung ist das Mischorgan im Wesentlichen benachbart zum zweiten Wärmetauscher angeordnet oder anordenbar. Insbesondere die Regelung der Temperatur des ersten Mediums, insbesondere des Kühlmittels, ist besonders vorteilhaft besonders schnell und ohne Verzögerung veränderbar bzw. regelbar.

In einer vorteilhaften Weiterbildung ist das Mischorgan einteilig mit dem zweiten Wärmetauscher ausgebildet. Auf diese Weise ist besonders vorteilhaft Bauraum einsparbar.

In einer weiteren vorteilhaften Ausgestaltung ist das Mischorgan im Wesentlichen benachbart zum ersten Wärmetauscher angeordnet.

In einer vorteilhaften Weiterbildung ist das Mischorgan einteilig mit dem ersten Wärmetauscher ausgebildet. Auf diese Weise ist Bauraum besonders vorteilhaft einsparbar.

In einer weiteren vorteilhaften Ausbildung ist mindestens ein Durchflussregelventil abströmseitig des zweiten Wärmetauschers angeordnet. Der Durchfluss des Kühlmittels, insbesondere durch den zweiten Wärmetauscher, insbesondere durch den Ladeluftkühler, ist besonders vorteilhaft regelbar uns/oder veränderbar und/oder einstellbar.

In einer weiteren vorteilhaften Ausbildung ist das Durchflussregelventil zuströmseitig des zweiten Wärmetauschers und abströmseitig des Mischorgans angeordnet. Der Durchfluss des Kühlmittels, insbesondere durch den zweiten Wärmetauscher, insbesondere durch den Ladeluftkühler, ist besonders vorteilhaft regelbar uns/oder veränderbar und/oder einstellbar.

In einer vorteilhaften Weiterbildung weist das Kreislaufsystem einen vierten Wärmetauscher, insbesondere einen Ladeluftkühler, einen zweiten Verdichter und eine zweite Turbine auf, wobei insbesondere der zweite Verdichter mit der zweiten Turbine koppelbar ist. Insbesondere sind der Verdichter und die Turbine besonders vorteilhaft zu einem Turbolader koppelbar.

In einer weiteren vorteilhaften Ausgestaltung ist der vierte Wärmetauscher abströmseitig des zweiten Verdichters und zuströmseitig des ersten Verdichters angeordnet. Insbesondere ist der Verdichter besonders vorteilhaft einem zweiten Medium, insbesondere Ladeluft durchströmbar, wobei das das zweite Medium durch den vierten Wärmetauscher in einer ersten Stufe besonders vorteilhaft zuvischenkühlbar ist. Insbesondere wird dadurch die Ladeluftkondensation besonders vorteilhaft verhindert.

In einer weiteren vorteilhaften Ausgestaltung ist der erste Medienstrom abströmseitig des Mischorgans und/oder des Durchflussregelventils in einen dritten Teilstrom und einen vierten Teilstrom verzweigbar ist, wobei der zweite Wärmetauscher mit dem dritten Teilstrom durchströmbar ist und/oder der vierte Wärmetauscher mit dem vierten Teilstrom durchströmbar ist oder umgekehrt.

In einer vorteilhaften Weiterbildung ist ein zweites Mischorgan im Wesentlichen benachbart zum vierten Wärmetauscher angeordnet und steht mit diesem in Strömungsverbindung. Auf diese Weise ist die Temperatur des Medienstroms, mit dem der vierte Wärmetauscher beströmbar ist, besonders vorteilhaft regelbar und/oder einstellbar.

In einer vorteilhaften Ausgestaltung ist das zweite Mischorgan einteilig mit dem vierten Wärmetauscher ausgebildet. Auf diese Weise ist besonders vorteilhaft Bauraum einsparbar.

In einer vorteilhaften Weiterbildung ist mindestens ein zweites Durchflussregelventil abströmseitig des vierten Wärmetauschers angeordnet. Auf diese Weise ist die Durchflussmenge eines ersten Mediums, insbesondere Kühlmediums durch den vierten Wärmetauscher besonders vorteilhaft regelbar.

In einer weiteren vorteilhaften Ausgestaltung ist das zweite Durchflussregelventil zuströmseitig des vierten Wärmetauschers und abströmseitig des zweiten Mischorgans angeordnet. Insbesondere sind das zweite Mischorgan und das Durchflussregelventil besonders bauraumsparend ausbildbar, insbesondere als eine Baueinheit ausbildbar.

Erfindungsgemäß ist ferner ein Kreislaufsystem ausgebildet, welches mindestens einen ersten Verdichter, mindestens einen zweiten Wärmetauscher, insbesondere einen Ladeluftkühler, der von einem ersten Medienstrom, insbesondere Kühlmittelstrom, durchströmbar ist, einen zweiten Medienstrom, insbesondere Ladeluftstrom, mindestens einen dritten Wärmetauscher, insbesondere Hochtemperaturkühlmittelkühler, mindestens einen ersten Wärmetauscher, insbesondere Niedertemperaturkühlmittelkühler aufweist, wobei der erste Wärmetauscher und/oder der dritte Wärmetauscher mit dem ersten Medienstrom durchströmbar sind und sich der erste Medienstrom in einen ersten Teilstrom und in zweiten Teilstrom verzweigt, wobei der erste Wärmetauscher mit dem ersten Teilstrom beströmbar und mit dem zweiten Teilstrom bypassbar ist.

In einer vorteilhaften Weiterbildung der Kreislaufsystem nach Anspruch 23, dadurch gekennzeichnet, dass ein vierter Wärmetauscher und ein zweiter Verdichter mit dem zweiten Medienstrom beströmbar sind, dadurch gekennzeichnet, dass sich der erste Medienstrom in einen dritten Teilstrom und einen vierten Teilstrom verzweigt, wobei der vierte Wärmetauscher mit dem dritten Teilstrom beströmbar und der erste Wärmetauscher mit dem vierten Teilstrom durchhströmbar ist.

Erfindungsgemäß ist ferner vorgesehen ein Mischorgan zur Temperaturregelung eines Medienstroms, mit mindestens einem ersten Eingang für einen ersten Teilstrom eines Mediums aufweisend eine erste Temperatur, mit einem zweiten Eingang für einen zweiten Teilstrom aufweisend eine zweite Temperatur und mit mindestens einem Ausgang für den Medienstrom, mit mindestens einem Dehnstoffelement, über dessen Ausdehnung eine jeweilige Ventilstellung eines Ventilkörpers einstellbar ist, wobei einer jeweiligen Stellung des Ventilkörpers eine jeweilige Zieltemperatur des Medienstroms zugeordnet ist, wobei die Ausdehnung des Dehnstoffelements mit mindestens einem elektrischen Strom regelbar ist.

In einer vorteilhaften Weiterbildung weist der Ventilkörper mindestens ein Kolbenelement auf, mit dem ein Schieberelement besonders vorteilhaft betätigbar ist.

In einer weiteren vorteilhaften Ausbildung weist das Schieberelement mindestens einen ersten Ventilsitz und mindestens einen zweiten Ventilsitz auf.

In einer vorteilhaften Weiterbildung weist dass das Mischorgan mindestens ein Federelement auf, mit dem der Ventilkörper, insbesondere besonders vorteilhaft in die erste Ventilendstellung bringbar ist.

In einer weiteren vorteilhaften Ausgestaltung ist der Ventilkörper von mindestens einer ersten Ventilendstellung über mindestens eine Zwischenventilstellung in mindestens eine zweite Ventilendstellung überführbar.

In einer vorteilhaften Ausbildung verschließt in der ersten Ventilendstellung das Schieberelement mit dem ersten Ventilsitz den ersten Eingang des ersten Teilstroms besonders vorteilhaft im Wesentlichen vollständig, wobei der zweite Teilstrom den Medienstrom besonders vorteilhaft bildet, und insbesondre die Zieltemperatur gleich der zweiten Temperatur ist.

In einer vorteilhaften Weiterbildung verschließt in der zweiten Ventilendstellung das Schieberelement mit dem zweiten Ventilsitz den zweiten Eingang des zweiten Teilstroms im Wesentlichen besonders vorteilhaft vollständig, wobei der erste Teilstrom den Medienstrom bildet, und insbesondre die Zieltemperatur gleich der ersten Temperatur ist.

In einer weiteren vorteilhaften Ausgestaltung ist in der Zwischenventlistellung das Schieberelement besonders vorteilhaft zwischen der ersten Ventilendstellung und der zweiten Ventilendstellung angeordnet, wobei über den ersten Eingang der erste Teilstrom aufweisend die erste Temperatur eintritt und sich mit dem zweiten Teilstrom, welcher durch den zweiten Eingang eintritt, aufweisend die zweite Temperatur besonders vorteilhaft mischt und den Medienstrom mit der Zieltemperatur bildet.

Ein Mischorgan, insbesondere der beschriebenen Art, wird besonders vorteilhaft in einem Kreislaufsystem, insbesondere der beschriebenen Art, verwendet.

Ausführungsbeispiele der Erfindung sind in der Zeichnung dargstellt und werden im Folgenden näher erläutert. Es zeigen
- Figur 1:: Kreislaufsystem mit einstufiger Aufladung,
- Figur 2:: weiteres Ausführungsbeispiel eines Kreislaufsystems mit einstufiger Aufladung,
- Figur 3:: weiteres Ausführungsbeispiel eines Kreislaufsystems mit einstufiger Aufladung,
- Figur 4:: Kreislaufsystem mit zweistufiger Aufladung, insbesondere Durchsatzregelung und/oder Temperaturregelung,
- Figur 5:: weiteres Ausführungsbeispiel eines Kreislaufsystems mit zweistufiger Aufladung sowie mit Temperaturregelung,
- Figur 6:: weiteres Ausführungsbeispiel eines Kreislaufsystems mit zweistufiger Aufladung, insbesondere mit Kondensatvermeidungsregelung,
- Figur 7:: Mischorgan,
- Figur 8:: weiteres Ausführungsbeispiel eines Mischorgans,
- Figur 9:: weiteres Ausführungsbeispiel eines Mischorgans und
- Figur 10:: isometrische Darstellung eines Mischorgans.

Vorteilhaft ist, dass das Kreislaufsystem einen vierten Wärmetauscher, insbesondere einen Ladeluftkühler, einen zweiten Verdichter und eine zweite Turbine aufweisen, wobei insbesondere der zweite Verdichter mit der zweiten Turbine koppelbar ist.

Vorteilhaft ist, dass der vierte Wärmetauscher abströmseitig des zweiten Verdichters und zuströmseitig des ersten Verdichters angeordnet ist.

Vorteilhaft ist, dass der erste Medienstrom abströmseitig des Mischorgans und/oder des Durchflussregelventils in einen dritten Teilstrom und einen vierten Teilstrom verzweigbar ist, wobei der zweite Wärmetauscher mit dem dritten Teilstrom durchströmbar ist und/oder der vierte Wärmetauscher mit dem vierten Teilstrom durchströmbar ist oder umgekehrt.

Vorteilhaft ist, dass ein zweites Mischorgan im Wesentlichen benachbart zum vierten Wärmetauscher angeordnet ist und mit diesem in Strömungsverbindung steht.

Vorteilhaft ist, dass das zweite Mischorgan einteilig mit dem vierten Wärmetauscher ausgebildet ist.

Vorteilhaft ist, dass mindestens ein zweites Durchflussregelventil abströmseitig des vierten Wärmetauschers angeordnet ist.

Vorteilhaft ist, dass das zweite Durchflussregelventil zuströmseitig des vierten Wärmetauschers und abströmseitig des zweiten Mischorgans angeordnet ist.

In vorteilhafter Weise ist weiterhin ein Kreislaufsystem vorgesehen, aufweisend mindestens einen ersten Verdichter,mindestens einen zweiten Wärmetauscher, insbesondere einen Ladeluftkühler, der von einem ersten Medienstrom, insbesondere Kühlmittelstrom, durchströmbar ist, einen zweiten Medienstrom, insbesondere Ladeluftstrom, mindestens einen dritten Wärmetauscher, insbesondere Hochtemperaturkühlmittelkühler, mindestens einen ersten Wärmetauscher, insbesondere Niedertemperaturkühlmittelkühler, wobei der erste Wärmetauscher und/oder der dritte Wärmetauscher mit dem ersten Medienstrom durchströmbar sind, dadurch gekennzeichnet, dass sich der erste Medienstrom in einen ersten Teilstrom und in zweiten Teilstrom verzweigt, wobei der erste Wärmetauscher mit dem ersten Teilstrom beströmbar und mit dem zweiten Teilstrom bypassbar ist.

Vorteilhaft ist, dass ein vierter Wärmetauscher und ein zweiter Verdichter mit dem zweiten Medienstrom beströmbar sind, dadurch gekennzeichnet, dass sich der erste Medienstrom in einen dritten Teilstrom und einen vierten Teilstrom verzweigt, wobei der vierte Wärmetauscher mit dem dritten Teilstrom beströmbar und der erste Wärmetauscher mit dem vierten Teilstrom durchströmbar ist.

In vorteilhafter Weise ist weiterhin ein Mischorgan zur Temperaturregelung eines Medienstroms, mit mindestens einem ersten Eingang für einen ersten Teilstrom eines Mediums aufweisend eine erste Temperatur, mit einem zweiten Eingang für einen zweiten Teilstrom aufweisend eine zweite Temperatur und mit mindestens einem Ausgang für den Medienstrom, mit mindestens einem Dehnstoffelement, über dessen Ausdehnung eine jeweilige Ventilstellung eines Ventilkörpers einstellbar ist, wobei einer jeweiligen Stellung des Ventilkörpers eine jeweilige Zieltemperatur des Medienstroms zugeordnet ist, dadurch kennzeichnet, dass das die Ausdehnung des Dehnstoffelements mit mindestens einem elektrischen Strom regelbar ist.

Vorteilhaft ist, dass der Ventilkörper mindestens ein Kolbenelement aufweist, mit dem ein Schieberelement betätigbar ist.

Vorteilhaft ist, dass das Schieberelement mindestens einen ersten Ventilsitz und mindestens einen zweiten Ventilsitz aufweist.

Vorteilhaft ist, dass das Mischorgan mindestens ein Federelement aufweist.

Vorteilhaft ist, dass der Ventilkörper von mindestens einer ersten Ventilendstellung über mindestens eine Zwischenventilstellung in mindestens eine zweite Ventilendstellung überführbar ist.

Vorteilhaft ist, dass in der ersten Ventilendstellung das Schieberelement mit dem ersten Ventilsitz den ersten Eingang des ersten Teilstroms im Wesentlichen vollständig verschließt, wobei der zweite Teilstrom den Medienstrom bildet, und insbesondre die Zieltemperatur gleich der zweiten Temperatur ist.

Vorteilhaft ist, dass in der zweiten Ventilendstellung das Schieberelement mit dem zweiten Ventilsitz den zweiten Eingang des zweiten Teilstroms im Wesentlichen vollständig verschließt, wobei der erste Teilstrom den Medienstrom bildet, und insbesondre die Zieltemperatur gleich der ersten Temperatur ist.

Vorteilhaft ist, dass in der Zwischenventilstellung das Schieberelement zwischen der ersten Ventilendstellung und der zweiten Ventilendstellung angeordnet ist, wobei über den ersten Eingang der erste Teilstrom aufweisend die erste Temperatur eintritt und sich mit dem zweiten Teilstrom, welcher durch den zweiten Eingang eintritt, aufweisend die zweite Temperatur mischt und den Medienstrom mit der Zieltemperatur bildet.

In vorteilhafter Weise ist weiterhin die Verwendung eines Mischorgans in einem Kreislaufsystem vorgesehen.

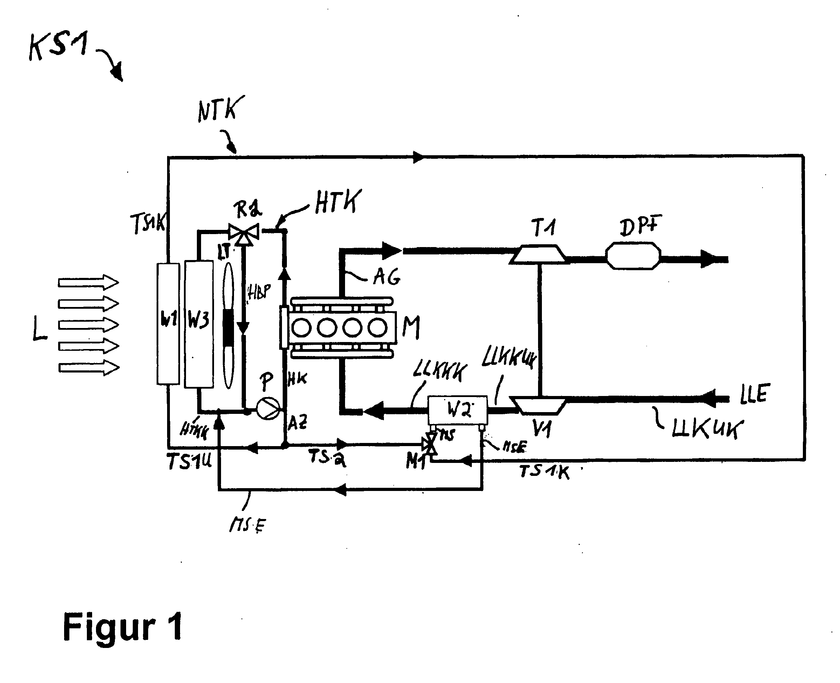

Figur 1 zeigt ein Kreislaufsystem mit einstufiger Aufladung.
Das Kreislaufsystem KS1 weist einen Hochtemperaturkreislauf HTK und einen Niedertemperaturkreislauf auf. In dem Hochtemperaturkreislauf HTK strömt ein erstes Medium, ein flüssiges Kühlmittel. Der Hochtemperaturkreislauf HTK weist einen dritten Wärmetauscher W3, insbesondere einen Kühlmittelkühler, ein Regelelement R2 (beispielsweise ein Thermostat) sowie eine Pumpe P auf. Die Pumpe P pumt das erste Medium, insbesondere das flüssige Kühlmittel durch den Hochtemperaturkreislauf HTK, insbesondere auch durch den Niedertemperaturkreislauf. In einem Hochtemperaturabschnitt HK wird ein Verbrennungsmotor M von einem Teil des ersten Mediums durchströmt und dabei gekühlt. Das erste Medium erwärmt sich dabei und beströmt ein Regelorgan R2. Das Regelorgan R2 zweigt den ersten Medienstrom, einen Hochtemperaturstrom, auf, der einem dritten Wärmetauscher W3, insbesondere einem Kühlmittelkühler zugeführt wird, diesen durchströmt und dabei gekühlt wird, und einen Hochtemperaturbypass HBP auf, der den Wärmetauscher W3 umgeht. Dabei kann sowohl das gesamte Kühlmittel ungekühlt durch den Hochtemperaturbypass HBP strömen und kein Kühlmittel durch den Wärmetauscher W3 strömen. In einer anderen Schaltstellung des Regelorgans R2 strömt das gesamte Kühlmittel durch den Wärmetauscher W3 und kein Kühlmittel durch den Hochtemperaturbypass HBP. In einer weiteren Schaltstellung des Regelorgans R2 strömt ein Teil des Kühlmittel durch den Hochtemperaturbypass HBP und ein weiterer Teil durchströmt den dritten Wärmetauscher W3.

Insbesondere vor dem dritten Wärmetauscher W3 ist ein erster Wärmetauscher W1 angeordnet. Hinter dem dritten Wärmetauscher W3 ist ein Lüfter angeordnet. Der Lüfter dreht sich und saugt dabei insbesondere Luft L, insbesondere Außenluft, durch den ersten Wärmetauscher W1 und durch den dritten Wärmetauscher W3 an und/oder Luft strömt durch die Fahrgeschwindigkeit durch den ersten und/oder den dritten Wärmetauscher.

Das durch den dritten Wärmetauscher W3 gekühlte Medium, insbesondere das Kühlmedium, strömt in einem Strömungsabschnitt HTKK und wird gegebenenfalls mit dem ungekühlten ersten Medium, das durch den Hochtemperaturbypass HBP strömt vereinigt, wobei vor der Vereinigung erwärmtes erstes Medium, welches aus dem zweiten Wärmetauscher W2, insbesondere dem Ladeluftkühler, abgeführt wird dem Strömungsabschnitt HTKK zugeführt. Das vereinigte Kühlmittel durchströmt eine Pumpe P und wird dabei auf ein höheres Druckniveau gebracht. Der Kühlmittelstrom zweigt sich nach dem Durchströmen einer Pumpe in den Hochtemperaturabschnitt HK und einen Abzweig AZ auf.

Der Abzweig AZ bildet die Strömungsverbindung zwischen Hochtemperaturkreislauf HTK und Niedertemperaturkreislauf NTK. Der Abzweig verzweigt sich in einen ersten Teilstrom TS1U des ersten Mediums, insbesondere des Kühlmittels, und einen zweiten Teilstrom TS2.

Der erste Teilstrom TS1U durchströmt den ersten Wärmetauscher W1 und wird durch die Luft gekühlt und strömt vom Wärmetauscher W1 als gekühlter Strom des ersten Mediums, insbesondere des flüssigen Kühlmittels, TS1K ab. Der gekühlte erste Teilstrom des ersten Mediums TS1K beströmt das Mischorgan M1. Der zweite Teilstrom TS2 des nicht durch den Wärmetauscher W1 gekühlten ersten Mediums beströmt ebenfalls das Mischorgan M1. Der erste Teilstrom TS1K weist eine erste Temperatur auf. Der zweite Teilstrom TS2 weist eine zweite Temperatur auf.

Das Mischorgan M1 derart regelbar, dass es verschiedene Stellungen einnehmen kann. In einer ersten Stellung des Mischorgans M1 wird keinerlei von W1 gekühltes Medium dem zweiten Wärmetauscher zugeführt, sondern nur ungekühltes Medium des zweiten Teilstroms TS2 der zweiten Temperatur. Damit ist der Medienstrom MS im Wesentlichen der zweite Teilstrom TS2. Die Zieltemperatur ist im Wesentlichen die zweite Temperatur.
In einer anderen Stellung des Mischorgans M1 wird dem zweiten Wärmetauscher W2 nur durch den ersten Wärmetauscher W1 gekühltes und dem Mischorgan M1 über den ersten Teilstrom TS1K zugeführtes erstes Medium zugeführt. Damit ist der Medienstrom MS im Wesentlichen der erste Teilstrom T51K. Die Zieltemperatur ist im Wesentlichen die erste Temperatur.
In weiteren Stellungen des Mischorgans M1 wird der erste Teilstrom TS1K aufweisend die erste Temperatur mit dem zweiten Teilstrom TS2 aufweisend die zweite Temperatur derart gemischt, dass der Medienstrom die Zieltemperatur aufweist. Die Zieltemperatur ist dabei derart regelbar, dass sie folgende Bedingung erfüllt: erste Temperatur ≤ Zieltemperatur ≤ zweite Temperatur Die Regelung der Zieltemperatur wird durch die Mischung aus kaltem und warmem Kühlmittel erreicht. Das Mischorgan M1 kann ein eintrittgeregelter Kennfeld-Misch-Thermostat und/oder ein elektrisch ansteuerbares Ventil und/oder ein Drehkolbenventil und/oder Tellerventil und/oder ein Modellbasierter Regler sein. Ein Modellbasierter Regler wird insbesondere Motorkennfeld geregelt. Insbesondere bei der Verwendung eines eintrittgeregeften Kennfeid-Misch-Thermostats, ist der Thermostat mit der Kühlmitteltemperatur am Austritt des Ladeiuftkühlers und beispielsweise die Kühlmitteltemperatur am Austritt des Motors regel- und/oder steuerbar.

Bei einem modellbasierten Mischorgan M1 ist sind mögliche Eingangsgrößen die Motorlast und/oder die Motordrehzahl des Motors M und/oder die Kühlmitteltemperatur am Austritt des Ladeluftkühler des Stromes MSE und/oder der Gegendruck des Partikelfilters DPF.

Alle Ausführungsformen des Mischorgans M1 gewährleisten die optimale Ansaugluft Temperatur bei Volllast, Teillast Betriebspunkten und dynamischen Vorgängen.

Das Mischorgan M1 ist besonders vorteilhaft benachbart zum zweiten Wärmetauscher W2, insbesondere benachbart zum Ladeluftkühler, angeordnet, um die benötigte Kühlmitteltemperatur sofort an dem Ladeluftkühler W2 einstellen zu können, insbesondere ohne zeitliche Verzögerung.
Die Leitungen zwischen dem Mischorgan M1 und dem zweiten Wärmetauscher W2 sind so kurz wie möglich auszuführen. Insbesondere ist das Mischorgan mit dem Wärmetauscher einteilig ausgebildet. Dadurch treten bei Lastsprüngen des Motors M keine Verzögerungen bei einer erforderlichen Nachregelung der Kühlmitteltemperatur am Eintritt des Wärmetauschers W2 auf. Dieser Funktionalitätsvorteil kann ebenfalls erzielt werden, indem das Mischorgan
an dem Ladeluftkühler integriert ist. Diese Integration bringt zusätzliche Bauraumvorteile. Ein Mischorgan in Form eines Integralthermostats kann über einen Flansch am zweiten Wärmetauscher befestigt werden. Ein Schlauchthermostat kann mit Schlauchschellen Befestigt werden.

Der zweite Wärmetauscher kann in anderen nicht dargestellten Ausführungen ein Abgaswärmetauscher und/oder ein Olkühler und/oder ein Kühlmittelkühler und/oder ein Kondensator einer Klimaanlage und/ ein Verdampfer einer Klimaanlage sein.

Der Medienstrom MS durchströmt den zweiten Wärmetauscher W2 und verlässt diesen erwärmt als Strom MSE.

Der zweite Wärmetauscher kühlt insbesondere ein zweites Medium, insbesondere ein gasförmiges Medium, insbesondere Ladeluft. Die Ladeluft wird aus der Umgebung an einer Ansaugstelle LLE angesaugt beströmt über einen Strömungskanal LLKUK einen ersten Verdichter V1 wobei der Druck des zweites Mediums und die Temperatur erhöht wird. In dem zweiten Wärmetauscher wird der zweite Medienstrom abgekühlt und beströmt über eine Leitung LLKKK den Motor M. An einer nicht dargestellten Stelle wird der verdichten und gekühlten Ladeluft Kraftstoff beigemischt und in dem Motor M zu Abgas verbrannt, welches über eine Abgasleitung einer ersten Turbine T1 und anschließend einem Partikelfilter DPF zugeführt wird. Die Turbine T1 ist mit dem Verdichter V1, insbesondere zu einem Turbolader, gekoppelt.
Die Aufladung erfolgt im dargestellten Beispiel einstufig kann aber auch zweistufig erfolgen.

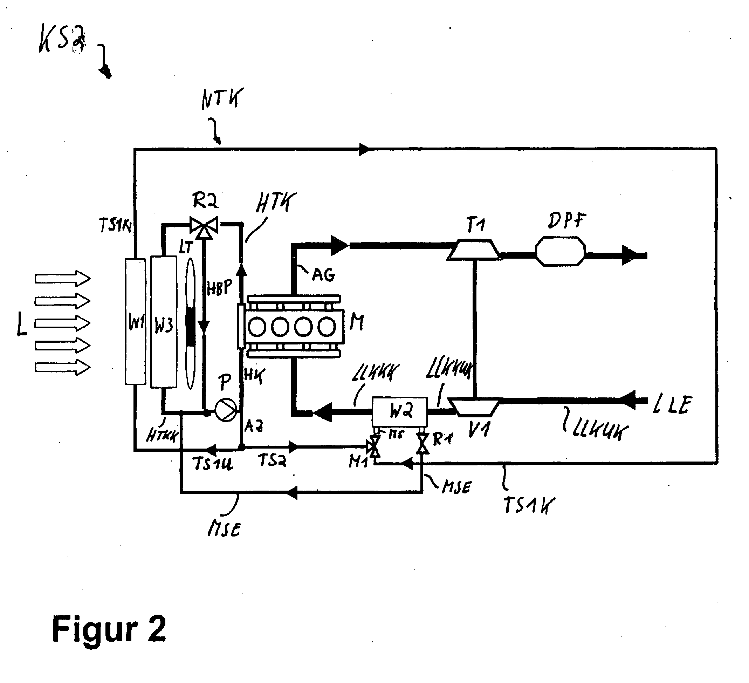

Figur 2 zeigt ein weiteres Ausführungsbeispiel eines Kreislaufsystems mit einstufiger Aufladung. Gleiche Merkmale sind mit den gleichen Bezugszeichen wie in Figur 1 versehen.

Im Unterschied zu Figur 1 weist das Kreislaufsystem ein Durchflussregelventil R1 auf. Das Durchflussregelventil R1, insbesondere das Thermostat, ist im dargestellten Ausführungsbeispiel abströmseitig des zweiten Wärmetauschers angeordnet. Das Durchflussregelventil R1 ist aber auch abströmseitig des Mischorgans M1 und zuströmseitig des zweiten Wärmetauschers W2 anordenbar. Insbesondere sind das Mischorgan M1 und das Durchflussregelventil einteilig, insbesondere in einer Baueinheit ausführbar.

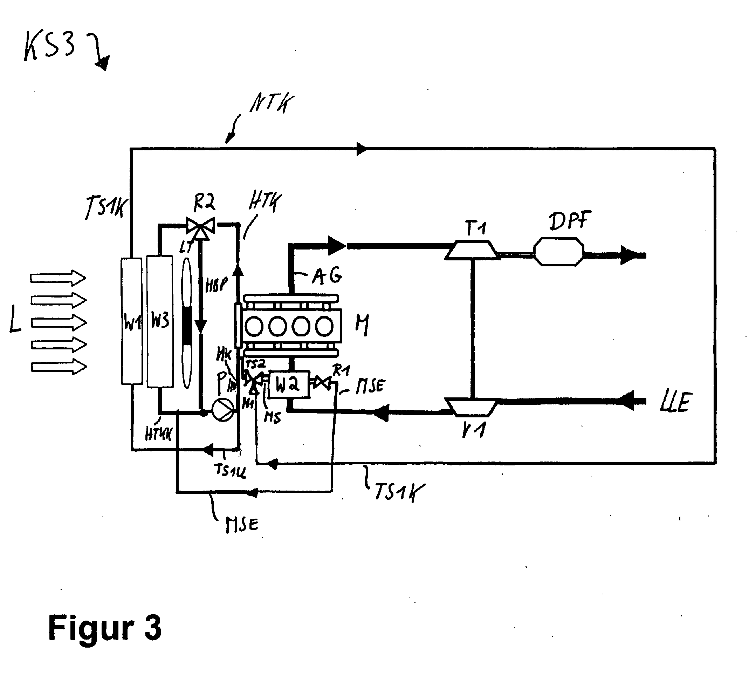

Figur 3 zeigt ein weiteres Ausführungsbeispiel eines Kreislaufsystems mit einstufiger Aufladung. Gleiche Merkmale sind mit den gleichen Bezugszeichen wie in den vorherigen Figuren versehen.

Im dargestellten Ausführungsbeispiel zweigt der erste Teilstrom TS1U direkt nach der Pumpe ab und wir dem ersten Wärmetauscher W1 zugeführt. Der zweite Teilstrom TS2 wird erst kurz vor dem Motor M aus dem Hochtemperaturabschnitt HK abgezeigt und dem Mischorgan M1 zugeführt. besonders vorteilhaft ist der zweite Wärmtauscher auf diese Weise benachbart zum Motor M anordenbar, wodurch Bauraum vorteilhaft eingespart wird.

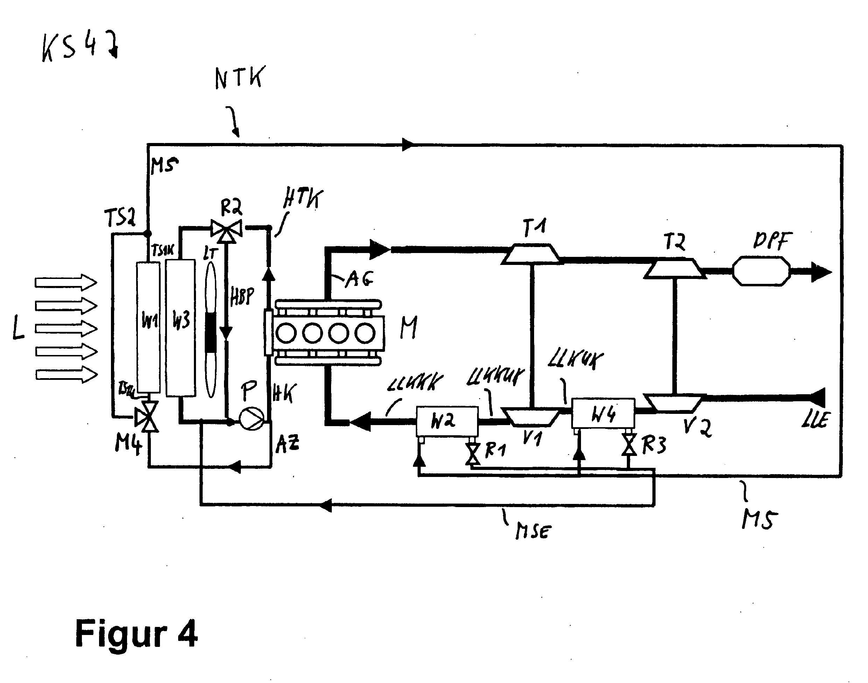

Figur 4 zeigt ein Kreislaufsystem mit zweistufiger Aufladung mit Dursatzregelung und/oder Temperaturregelung. Gleiche Merkmale sind mit den gleichen Bezugszeichen wie in den vorherigen Figuren versehen.

Das Kreislaufsystem KS4 weist einen zweiten Verdichter V2 und eine zweite Turbine T2 auf, die insbesondere zu einem Turbolader koppelbar sind.

Der zweite Verdichter V2 komprimiert die angesaugte Ladeluft vor. Ein vierter Wärmetauscher W4 führt eine Zwischenkühlung der Ladeluft durch. Anschließend verdichtet der erste Verdichter V1 die Ladeluft weiter, worauf eine zweite Abkühlung der Ladeluft im zweiten Wärmetauscher W2 erfolgt. Abströmseitig von W4 ist ein Durchflussregelventil R3 angeordnet. Es ist aber auch an anderen Stellen anordenbar siehe dazu die möglichen Anordnungen des Durchflussregelventils R1.
Ein Mischorgan M4 ist insbesondere zuströmseitig des ersten Wärmestauschers W1, insbesondere benachbart dazu, anordenbar. Es kann den zweiten Teilstrom TS2 am Wärmetauscher W1 bypassen und/oder den ersten Teilstrom TS1U dem ersten Wärmetauscher zuführen. Das Mischorgan M4 ist besonders vorteilhaft in den ersten Wärmetauscher integriert. Insbesondere lässt sich dadurch der Druck, der auf den ersten Wärmetauscher W1 wirkt besonders vorteilhaft begrenzen. Insbesondere dient dies besonders vorteilhaft zur Druckwellenbegrenzung. Auf diese Weise wird die Kühlerfestigkeit gesteigert. Gleichzeitig kann durch die Integration des Mischorgans in den Wärmetauscher eine Materialeinsparung und Gewichts- sowie Kosteneinsparung erzielt werden, da zusätzliche Gehäuseteile für das Mischorgan entfallen.

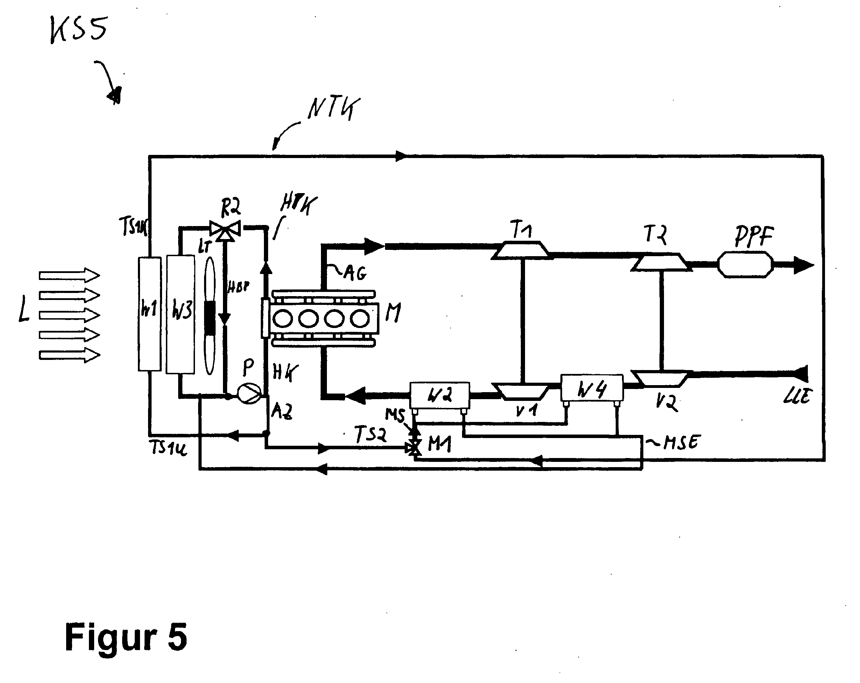

Figur 5 zeigt ein weiteres Ausführungsbeispiel eines Kreislaufsystems mit zweistufiger Aufladung und zur Temperaturregelung. Gleiche Merkmale sind mit den gleichen Bezugszeichen wie in den vorherigen Figuren versehen.

Der Medienstrom MS wird abströmseitig des Mischorgans in einen dritten Teilstrom, der dem zweiten Wärmetauscher zuführbar ist, und/oder in einen vierten Teilstrom aufgezweigt, der dem vierten Wärmetauscher W4 zuführbar ist. Auf diese Weise ist die Regelstrecke besonders kurz, so dass unmittelbar, insbesondere ohne Zeitverzögerung geregelt wird. Insbesondere werden der zweite Wärmetauscher W2 und der vierte Wärmetauscher W4 mit derselben Temperatur geregelt.

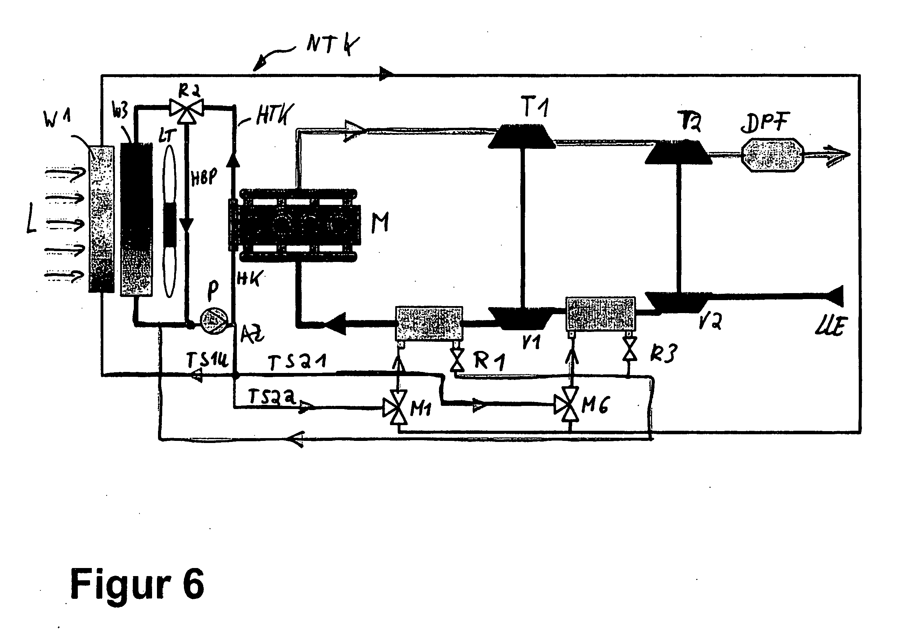

Figur 6 zeigt ein weiters Ausführungsbeispiel eines Kreislaufsystem mit zweistufiger Aufladung zur Vermeidung von Kondensatentstehung. Gleiche Merkmale sind mit den gleichen Bezugszeichen wie in den vorherigen Figuren versehen.

Der Abzweig AZ teilt sich hierbei in den ersten Teilstrom TS1U, den zweitenersten Teilstrom TS21 und den zweitenzweiten Teilstrom TS22 auf. TS21 wird dem ersten Mischorgan M1 zugeführt. TS22 wird dem zweiten Mischorgan M6 zugeführt. Das zweite Mischorgan M6 ist entspricht im Wesentlichen dem Aufbau des ersten Mischorgans M1. Insbesondere wird verhindert, dass Ladeluft im vierten Wärmetauscher W4 kondensiert, da über die Regelung verschiedene Temperaturen erreicht werden unter anderem auch eine Temperatur bei der sich kein Kondensat bildet.

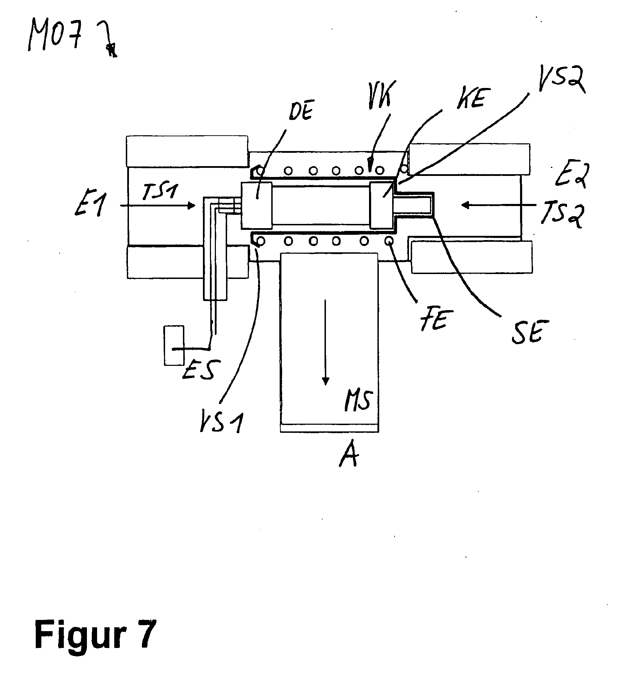

Figur 7 zeigt ein Mischorgan. Gleiche Merkmale sind mit den gleichen Bezugszeichen wie in den vorherigen Figuren versehen.

Das Mischorgan M07 regelt insbesondere die Temperatur eines Medienstroms. Es weist einen ersten Eingang E1 für einen ersten Teilstrom TS1 eines Mediums auf. Der erste Teilstrom TS1 weist eine erste Temperatur auf. Das Mischorgan M07 weist einen zweiten Eingang E2 für einen zweiten Teilstrom TS2 mit einer zweiten Temperatur auf. Darüber hinaus weist das Mischorgan M07 einen Ausgang A für den Medienstrom MS auf. In dem Mischorgan ist ein Ventilkörper VK angeordnet. Der Ventilkörper umfasst ein Dehnstoffelement DE, ein Kolbenelement KE. Der Ventilkörper ist als Schieberelement SE ausgebildet. Über die Ausdehnung des Dehnstoffelements ist eine jeweilige Ventilstellung eines Ventilkörpers einstellbar, wobei einer jeweiligen Stellung des Ventilkörpers VK eine jeweilige Zieltemperatur des Medienstroms MS zugeordnet. Die Ausdehnung des Dehnstoffelements DE ist mit mindestens einem elektrischen Strom ES regelbar. Das Dehnstoffelement wird insbesondere durch den elektrischen Strom beheizt, dehnt sich aus und verschiebt ein Kolbenelement KE. Das Kolbenelement ist beweglich angeordnet und das Dehnstoffelement ist mit dem Gehäuse des Mischorgans fest verbunden. In einer anderen Ausführung kann sich das Dehnstoffelement bewegen und der Kolben fest verbunden mit dem Mischorgan sein.

Das Mischorgan weist ein Federelement FE auf, mit dem der Ventilkörper in eine erste Endstellung bringbar. Das Mischorgan ist in eine erste Ventilendstellung bringbar, wobei das Schieberelement mit dem ersten Ventilsitz den ersten Eingang des ersten Teilstroms im Wesentlichen vollständig verschließt, wobei der zweite Teilstrom den Medienstrom bildet, und insbesondere die Zieltemperatur gleich der zweiten Temperatur ist.
Das Mischorgan weist eine zweite Ventilendstellung auf, in die das Schieberelement bringbar ist, wobei mit dem zweiten Ventilsitz der zweite Eingang des zweiten Teilstroms im Wesentlichen vollständig verschließbar ist, wobei der erste Teilstrom den Medienstrom bildet, und insbesondere die Zieltemperatur gleich der ersten Temperatur ist.
Das Mischorgan weist eine Zwischenventilsteilung auf, in die das Schieberelement bringbar ist, die zwischen der ersten Ventilendstellung und der zweiten Ventilendstellung angeordnet ist, wobei über den ersten Eingang der erste Teilstrom aufweisend die erste Temperatur eintritt und sich mit dem zweiten Teilstrom, welcher durch den zweiten Eingang eintritt, aufweisend die zweite Temperatur mischt und den Medienstrom mit der Zieltemperatur bildet.

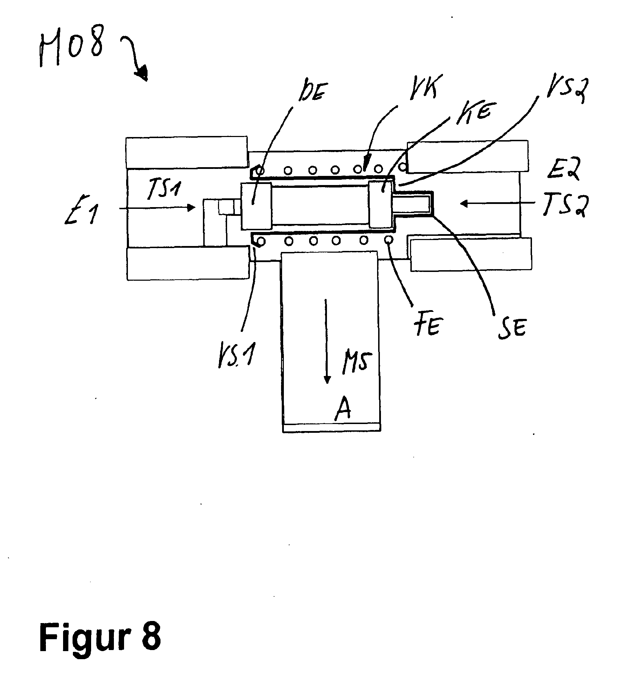

Figur 8 zeigt ein weiters Ausführungsbeispiel eines Mischorgans. Gleiche Merkmale sind mit den gleichen Bezugszeichen wie in den vorherigen Figuren versehen.

Im Unterschied zu Figur 7 weist das Mischorgan M08 keine Bestromung mit ES auf, sondern wird durch die erste Temperatur und/oder die zweite Temperatur gesteuert und/oder geregelt.

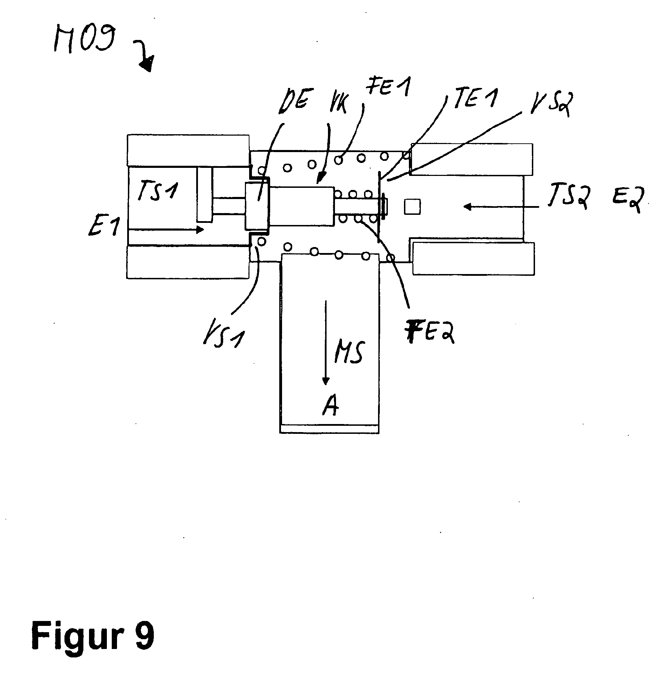

Figur 9 zeigt ein weiters Ausführungsbeispiel eines Mischorgans. Gleiche Merkmale sind mit den gleichen Bezugszeichen wie in den vorherigen Figuren versehen.

In dieser Ausführung ist neben einem ersten Federelement FE1 ein zweites Federelement FE2 in dem Mischorgan M09 angeordnet. Ein Tellerelement TE1 bildet den zweiten Ventilsitz und kann den zweiten Eingang E2 verschließen oder öffnen. Dabei bringt FE2 das Tellerelement in die zweite Ventilendstellung.

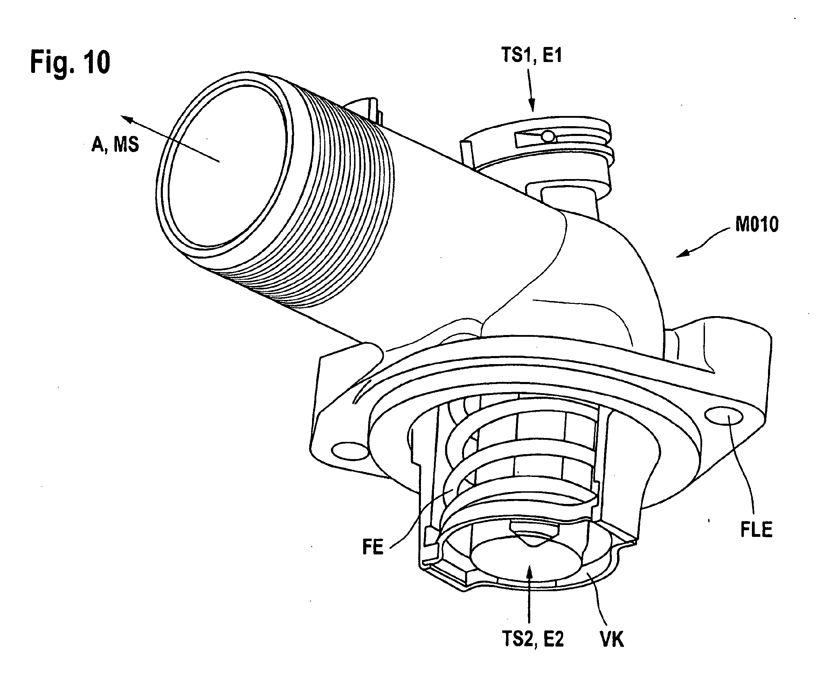

Figur 10 zeigt eine isometrische Darstellung eines Mischorgans. Gleiche Merkmale sind mit den gleichen Bezugszeichen wie in den vorherigen Figuren versehen.

Das Mischorgan M010 weist einen Flansch auf.

Die Merkmale der verschiedenen Ausführungsbeispiele sind beliebig miteinander kombinierbar. Die Erfindung ist auch für andere als die gezeigten Gebiete einsetzbar.

## Patentansprüche

1. Kreislaufsystem aufweisend mindestens einen ersten Teilstrom (TS1, TS1U, TS1K), mit dem ein erster Wärmetauscher (W1) durchströmbar ist, und einen zweiten Teilstrom (TS2, TS21, TS22) eines ersten Mediums, mindestens einen zweiten Wärmetauscher (W2), der als Ladeluftkühler ausgebildet ist, und welcher von einem ersten Medienstrom durchströmbar ist, mindestens ein regelbares Mischorgan (M1, M4, M6, M07, M08, M09, M010), **dadurch gekennzeichnet, dass** das regelbare Mischorgan (M1, M4, M6, M07, M08, M09, M010) zuströmseitig mit dem ersten Teilstrom (TS1, TS1U, TS1K) und mit dem zweiten Teilstrom (TS2, TS21, TS222) beströmbar ist und abströmseitig den Medienstrom mit einer Zieltemperatur erzeugt, wobei der erste Wärmetauscher (W1) in einem Niedertemperaturkreislauf (NTK) angeordnet ist, das Kreislaufsystem (KS1, KS2, KS3, KS4, KS5, KS6) einen dritten Wärmetauscher (W3) als einen Kühlmittelkühler aufweist, der in einem Hochtemperaturkreislauf (HTK) zur Kühlung eines Verbrennungsmotors (M) angeordnet ist und das Kreislaufsystem (KS1, KS2, KS3, KS4, KS5, KS6) mindestens eine Pumpe (P) aufweist, die insbesondere im Hochtemperaturkreislauf (HTK) angeordnet ist, wobei der HochtempexaturkreisLauf (HTK) und der Niedertemperaturkreislauf (NTK) in Strömungsverbindung stehen.

2. Kreislaufsystem nach Anspruch 1, **dadurch gekennzeichnet, dass** das Kreislaufsystem mindestens einen zweiten Medienstrom, insbesondere einen Ladeluftstrom, aufweist, mit dem mindestens ein erster Verdichter (V1), mindestens eine erste Turbine (T1), wobei insbesondere der Verdichter (V1) und die Turbine (T1) koppelbar sind, und der zweite Wärmetauschers (W2) durchströmbar sind, wobei der zweite Wärmetauscher (W2) abströmseitig des ersten Verdichters (V1) angeordnet ist.

3. Kreislaufsystem nach einem der vorherigen Ansprüche, **dadurch gekennzeichnet, dass** der erste Teilstrom (TS1, TSIU, TS1K) aus dem Hochtemperaturkreislauf (HTK), insbesondere nach der Pumpe (P), abzweigbar ist und insbesondere zumindest abschnittsweise den Niedertemperaturkreislauf (NTK) bildet.

4. Kreislaufsystem nach einem der vorherigen Ansprüche, **dadurch gekennzeichnet, dass** das Mischorgan (M1, M4, M6, M07, M08, M09, M010) und der erste Wärmetauscher (W1), insbesondere ein Luft-Kühlmittelkühler, mit dem ersten Teilstrom (TS1, TS1U, TS1K) in Strömungsverbindung bringbar sind.

5. Kreislaufsystem nach einem der vorherigen Ansprüche, **dadurch gekennzeichnet, dass** der zweite Teilstrom (TS2, TS21, TS22) aus dem Hochtemperaturkreislauf (HTK), insbesondere nach der Pumpe (P) und insbesondere im Wesentlichen unmittelbar vor dem Verbrennungsmotor (M), abzweigbar ist.

6. Kreislaufsystem nach einem der vorherigen Ansprüche, **dadurch gekennzeichnet, dass** das Mischorgan (M1, M4, M6, M07, M08, M09, M010) im Wesentlichen benachbart zum zweiten Wärmetauscher (W2) angeordnet ist.

7. Kreislaufsystem nach einem der vorherigen Ansprüche, **dadurch gekennzeichnet, dass** das Mischorgan (M1, M4, M6, M07, M08, M09, M010) einteilig mit dem zweiten Wärmetauscher (W2) ausgebildet ist.

8. Kreislaufsystem nach einem der vorherigen Ansprüche, **dadurch gekennzeichnet, dass** das Mischorgan (M1, M4, M6, M07, M08, M09, M010) im Wesentlichen benachbart zum ersten Wärmetauscher (W1) angeordnet ist.

9. Kreislaufsystem nach einem der vorherigen Ansprüche, **dadurch gekennzeichnet, dass** das Mischorgan (M1, M4, M6, M07, M08, M09, M010) einteilig mit dem ersten Wärmetauscher (W1) ausgebildet ist.

10. Kreislaufsystem nach einem der vorherigen Ansprüche, **dadurch gekennzeichnet, dass** mindestens ein Durchflussregelventil (R1, R3) abströmseitig des zweiten Wärmetauschers (W2) angeordnet ist.

11. Kreislaufsystem nach einem der Ansprüche 1 bis 10, **dadurch gekennzeichnet, dass** das Durchflussregelventil (R1, R3) zuströmseitig des zweiten Wärmetauschers (W2) und abströmseitig des Mischorgans (M1, M4, M6, M07, M08, M09, M010) angeordnet ist.

## Claims

1. A circulation system comprising at least one first partial flow (TS1, TS1U, TS1K), which can flow trough a first heat exchanger (W1), and a second partial flow (TS2, TS21, TS22) of a first Medium, at least one second heat exchanger (W2, which is in the form of a change air cooled and through which a first media flow can flow, at least one adjustable mixing element (M1, M4, M6, M07, M08, M09, M010), **characterized in that** the adjustable mixing element (M1, M4, M6, M07, M08, M09, M10) can be passed through on the inflow side by the first partial flow (TS1, TS1U, TS1K) and the second partial flow (TS2, TS21, TS22) and, on the outflow side, generates the media flow having a target temperature, wherein the first heat exchanger (M1) is disposed in a low-temperature circuit (NTK), the circulation system (KS1, KS2, KS3, KS4, KS5, KS6) comprises a third heat exchanger (W3) as a coolant radiator, which its disposed in a high-temperature circuit (HTK) for cooling an internal combustion engine (M), and the circulation system (KS1, KS2, KS3, KS4, KS5, KS6) comprises at least one pump (P), which is disposed in the high-temperature circuits (HTK) in particular, wherein the high-temperature circuit (HTK) and the low-temperature circuit (NTK) are connected with respect to flow.

2. The circulation system according to claim 1, **characterized in that** the circulation system comprises at least one second media flow, in particular a charge air flow, which can pass through at least one first compressor (V1), at least one first turbine (T1), wherein the compressor (V1) and the turbine (T1) can be coupled in particular, and the second heat exchanger (W2), wherein the second heat exchanger (W2) is disposed on the outflow side of the first compressor (V1).

3. The circulation system according to one of the preceding claim, **characterized in that** the first partial flow (TS1, TS1U, TS1K) can be branched off of the high temperature circuits (HTK), in particular downstream of the pump (P), and, in particular, forms the low-temperature circuit (NTK) at least in sections.

4. The circulation system according to one of the preceding claims, **characterized in that** the mixing element (M1, M4, M6, M07, M08, M09, M010) and the first heat exchanger (W1), in particular an air-coolant radiator, can be flowconnected to the first partial flow (TS1, TS1U, TS1K).

5. The circulation system according to one of the preceding claims, **characterized in that** the second partial flow (TS2, TS21, TS22) can be branched off of the high temperature circuits (HTK), in particular downstream of the pump (P), and, in particular, substantially directly upstream of the interval combustion engine (M).

6. The circulation system according to one of the preceding claims, **characterized in that** the mixing element (M1, M4, M6, M07, M08, M09, M010) is disposed substantially adjacent to the second heat exchanger (W2).

7. The circulation system according to one of the preceding claims, **characterized in that** the mixing element (M1, M4, M6, M07, M08, M09, M010) is formed has one piece with the second heat exchanger (M2).

8. The circulation system according to one of the preceding claims, **characterized in that** the mixing element (M1, M4, M6, M07, M08, M09, M010) is disposed substantially adjacent to the first heat exchanger (W1).

9. The circulation system according to one of the preceding claims, **characterized in that** the mixing element (M1, M4, M6, M07, M08, M09, M010) is formed as one piece with the first heat exchanger (M1).

10. The circulation system according to one of the preceding claims, **characterized in that** at least one flow control value (R1, R3) is disposed of the outflow side of the second heat exchanger (W2).

11. The circulation system according to one of the claims 1 two 10, **characterized in that** the flow control valve (R1, R3) is disposed on the inflow side of the second heat exchanger (W2) and on the outflow side of the mixing element (M1, M4, M6, M07, M08, M09, M110).

## Revendications

1. Système de circuits présentant au moins un premier flux partiel (TS1, TS1U, TS1K) par lequel peint être traversé une premier échangeur de chaleur (W1), et un deuxième flux partiel (TS2, TS21, TS22) d'un premier milieu, au moins un deuxième échangeur de chaleur (W2) qui est conçu comme un refroidisseur d'air de suralimentation et qui peut être traversé par un premier flux de milieu, au moins un organe mélangeur réglable (M1, M4, M6, M07, M08, M09, M010),
**caractérisé en ce que** l'organe mélangeur réglable (M1, M4, M6, M07, M08, M09, M010) peut être traversé, côté entrée, par le premier flux partiel (TS1, TS1U, TS1K) et par le deuxième flux partie (TS2, TS21, TS22), et produit, côté sortie, le flux de milieu à une température cible, où le premier échanger de chaleur (W1) est disposé dans un circuit à basse température (HTK), le système de circuits (KS1, KS2, KS3, KS4, KS5, KS6) présenté un troisième échangeur de chaleur (M3) servant de refroidisseur du moyen de refroidissement, lequel échangeur de chaleur est disposé dans un circuit à haute température (HTK) servant au refroidissement d'un moteur à combustion interne (M), et le Système de circuits (KS1, KS2, KS3, KS4, KS5, KS6) présente au moins une pompe (P) qui est disposée en particulier dans le circuit à haute température (HTK), le circuit à haute température (HTK) et le circuits à basse température (NTK) étant en communication fluidique.

2. Système de circuits selon la revendication 1, **caractérisé en ce que** le Système de circuits présente au moins un deuxième flux de milieu, en particulier un flux d'air de suralimentation par lequel sont traversés au moins un premier compresseur (VI), au moins une première turbine (T1), le compresser (VI) et la turbine (tel) pouvait en particulier être couplés, et par lequel est traversé le deuxième échangeur de chaleur (W2), le deuxième échangeur de chaleur (W2) étant disposé côté sortie du premier compresseur (V1).

3. Système de circuits selon l'une cru l'autre des revendications précédentes, **caractérisé en ce que** le premier flux partiel (TS1, TS1U, TS1K) peul être dévié à partir du circuit à haute température (HTK), en particulier en aval de la pompe (P), et forme en particulier, au moins partiellement, le circuits à basse température (NTK).

4. Système de circuits selon l'une quelconque des revendication précédentes, **caractérisé en ce que** l'organe mélangeur (M1, M4, M6, M07, M08, M09, M010) et le premier échangeur de chaleur (M1), en particulier un refroidisseur du moyen de refroidissement et d'air, peuvent être placés en communication fluidique avec le premier flux partiel (TS1, TS1U, TS1K).

5. Système de circuits selon l'une quelconque des revendication précédente, **caractérisé en ce que** le deuxième flux partiel (TS2, TS21, TS22) peut être dévié à partir du circuit à haute température (HTK), en particulier en naval de la pompe (P) et, en particulier, sensiblement directement en amant du moteur à combustion interne (M).

6. Système de circuits selon l'une quelconque des revendications précédentes, **caractérisé en ce que** l'organe mélangeur (M1, M4, M6, M07, M08, M09, M010) est disposé sensiblement de façon contiguë au deuxième échangeur de chaleur (W2).

7. Système de circuits selon l'une quelconque des revendications précédentes, **caractérisé en ce que** l'organe mélangeur (M1, M4, M6, M07, M08, M09, M010) est conçu en formant un seul et même élément avec le deuxième échangeur de chaleur (W2).

8. Système de circuits selon l'urine quelconque des revendications précédentes, caractérisé en ce qui l'organe mélangeur (M1, M4, M6, M07, M08, M09, M010) est disposé sensiblement de façon contiguë au premier échangeur de chaleur (W1).

9. Système de circuits selon l'une quelconque des revendications précédentes, **caractérisé en ce que** l'organe mélangeur (mol, M4, M6, M07, M08, M09, M010) est conçu en formant un seul et même élément avec le premier échangeur de chaleur (W1).

10. Système dé circuits selon l'une quelconque des revendication précédentes, **caractérisé en ce qu'**au moins une soupape de régulation de débit (R1, R3) est disposée côté sortie du deuxième échangeur de chaleur (W2).

11. Système de circuits selon l'une quelconque des revendications 1 à 10, **caractérisé en ce que** la soupape de régulation de débit (R1, R3) est disposée côté entrée du deuxième échangeur de chaleur (W2) et côté sortie de l'organe mélangeur (M1, M4, M6, M07, M08, M09, M010).
